# EUROPÄISCHE PATENTANMELDUNG

(11) **EP 1 023 844 A2**
(43) Veröffentlichungstag der Anmeldung: **02.08.2000**
(21) Anmeldenummer: 00101341.6
(22) Anmeldetag: 24.01.2000
(51) Int. Cl.: A23N 17/00

(54) **Verfahren zum Herstellen von Mischfutter in verdichteter Form und Vorrichtung zum Durchführen desselben**

(30) Priorität: 28.01.1999 DE 19903313
(71) Anmelder: Eisenegger, Edwin, CH-9246 Niederbüren (CH)
(72) Erfinder: Eisenegger, Edwin, CH-9246 Niederbüren (CH)
(74) Vertreter: Stocker, Kurt

(57) **Zusammenfassung**

Zum Herstellen von Mischfutter, insbesondere von Futterwürfeln, wird das Ausgangsmaterial in einem Konditionierungsschritt zumindest erhitzt, in einem Formschritt geformt, insbesondere zu Würfeln gepresst, und anschliessend mittels Prozessluft gekühlt. Mit mindestens einem weiteren Temperatur-Reduktionsschritt, der den Kontakt der Prozessluft mit Futterteilen direkt nach deren Bereitstellung bei einer erniedrigten Temperatur und/oder die Abgabe der Prozessluft an die Umgebung mit einer erniedrigten Temperatur ermöglicht, kann der an die Umwelt abgegebene Geruchsanteil wesentlich verkleinert werden, ohne dass ein zusätzlicher Kühlaufwand benötigt wird.

## Beschreibung

Die Erfindung bezieht sich auf ein Verfahren nach dem Oberbegriff des Anspruches 1 und auf Vorrichtungen nach dem Oberbegriff der Ansprüche 5 und 7.

Die Produktion von Mischfutter in verdichteter Form (Expandat, Extrudat, Pellets) erfordert zur Sicherung einer gleichmässigen und stabilen Qualität des Endproduktes Veredlungsprozesse, in denen sowohl die Feuchtigkeit der zu verarbeitenden Materialien als auch deren Temperatur deutlich über das Ausgangsniveau, insbesondere auf 70 bis 100°C erhöht werden. Die zur Veredelung eingesetzten Verarbeitungsschritte umfassen beispielsweise das Konditionieren mit Dampf, Kontaktwärme und/oder gegebenenfalls mit Druck, das Pelletieren oder Extrudieren und insbesondere das Beaufschlagen des geformten Futters mit Zusatzstoffen. Den Veredelungsschritten muss zumindest ein Kühl- und/oder Trocknungsschritt nachgeschaltet werden, in dem Wärme und/oder Feuchtigkeit bzw. flüchtige Stoffanteile aus den Mischfutteragglomeraten soweit entfernt werden, dass eine stabile Lagerung möglich ist. Die dazu üblicherweise eingesetzten Kühl- und Trocknungsprozesse arbeiten mit Prozessluft, die aus der Umgebung angesaugt und an diese wieder abgeführt wird. Dadurch werden von der Prozessluft aufgenommene Geruchsstoffe an die Umgebung abgegeben, was zu erheblichen Geruchsbelastungen führen kann.

Bei verschiedenen Mischfuttern kann es gewünscht sein, nach der Formgebung die Oberfläche der Agglomerate mit weiteren Zusatzstoffen zu besprühen bzw. zu beaufschlagen. Beispielsweise wird den Futterwürfel nach dem Austritt aus einer Würfelpresse Fett, Öl, Melasse oder anderen flüssigen Zusatzstoffen zugegeben. Solche Futterwürfel geben vorallem bei der Herstellung, gegebenenfalls aber auch beim Lagern und beim Verbrauch einen unangenehmen Geruch ab.

Um eine Geruchsbelastung der Umwelt zu vermeiden, schlägt der Artikel "Vergleich offener und geschlossener Kühlprozesse für die Mischfutterherstellung" (Die Mühle+ Mischfuttertechnik, 131. Jahrgang, 19.Mai 1994, Heft 20) vor, die Prozessluft in einem geschlossenen Kreislauf zu führen. Dabei wird in einem eigenen Kühlsystem die Prozessluft abgekühlt und von ihr aus den Mischfutteragglomeraten aufgenommene Feuchtigkeit zusammen mit den Geruchsstoffen auskondensiert. Das Kondensat muss gesammelt und beispielsweise in einer Kläranlage behandelt werden. Nebst dem Entsorgungsaufwand für das Kondensat, sind bei dieser Lösung auch die Investitionen und der Betriebsenergieaufwand für den geschlossenen Prozessluft-Kreislauf, insbesondere für den benötigten Wärmetauscher und die Kühlvorrichtung, nachteilig. Ein weiterer Nachteil des geschlossenen Prozessluft-Kreislaufs besteht darin, dass sich bei unzureichender Staubabscheidung schimmel- und bakterienhaltige Ablagerungen bilden, die das produzierte Futter kontaminieren können.

Die erfindungsgemässe Aufgabe besteht nun darin eine Lösung zu finden, mit der Mischfutteragglomerate mit kleiner Geruchsbelastung der Umwelt hergestellt werden können. Insbesondere sollen die Geruchsprobleme auch bei beschichteten, bzw. mit Zusatzstoffen beaufschlagten Futterwürfeln vermindert werden.

Zur Lösung der Aufgabe wird ein Verfahren mit den Merkmalen des Anspruches 1 bzw. Vorrichtungen gemäss Anspruch 5 oder 7 beschrieben. Die abhängigen Ansprüche beschreiben alternative bzw. vorteilhafte Ausführungsvarianten.

Bei den mit Zusatzstoffen beaufschlagten Futterwürfeln treten sowohl die vom Trocknen der Würfel als auch die von den aufgebrachten Zusatzstoffen stammenden Geruchsanteile auf. Aufgrund verschiedener überlagerter Effekte handelt es sich um ein mehrschichtiges Problem. Der Geruch der Prozessluft wird zumindest teilweise durch Stoffe hervorgerufen, die nach dem Beaufschlagen der Würfel beispielsweise mit Fett weniger gut aus der Würfelmasse austreten können. Andererseits können die Zusatzstoffe weniger gut in die Futterwürfel eindringen, wenn aus diesen nicht genügend Feuchtigkeit mit Geruchsstoffen ausgetreten ist. Zudem hängt auch die Lagerbeständigkeit der Würfel von deren Feuchtigkeit ab. Die unmittelbar nach der Fertigstellung der Würfel bzw. Agglomerate noch herrschende hohe Temperatur von bis zu 70°C verursacht sowohl eine starke Erhöhung der Prozesslufttemperatur als auch ein erhöhtes Abgeben bzw. Verdampfen von aufgebrachten Zusatzstoffen. Empfindliche Zusatzstoffe können aufgrund der hohen Temperatur geruchserzeugende Reaktionen durchlaufen. Die totale Geruchsentwicklung hängt also von verschiedenen Faktoren ab, die insbesondere auch voneinander abhängig sind. Eine Geruchsreduktion in der wegströmenden Prozessluft soll sowohl mit als auch ohne das Aufbringen von Zuschlagstoffen erzielt werden. Weil zumindest die Menge der wasserlöslichen, bzw. der von Wasserdampf mitführbaren Geruchsanteile vom Wasserdampf-Anteil der abströmenden Prozessluft abhängen, ist es zur Geruchsreduktion nötig den Wasserdampf-Anteil der abströmenden Prozessluft zu reduzieren.

Weil die Prozessluft bei tieferer Temperatur einen kleineren Wasserdampf-Anteil und somit weniger Geruchsstoffe mitführen kann, sollen Massnahmen zur Reduktion der Temperatur der Prozessluft vorgesehen werden. Diese Massnahmen können in einem Bereich von der Geruchsstoff-Aufnahme durch die Prozessluft bis vor der Abgabe der Prozessluft an die Umgebung durchgeführt werden. In diesem Bereich soll mindestens ein weiterer Temperatur-Reduktionsschritt vorgesehen werden, der den Kontakt der Prozessluft mit Futterteilen direkt nach deren Bereitstellung, also insbesondere nach dem Beaufschlagen mit Zusatzstoffen, bei einer erniedrigten Temperatur und/oder die Abgabe der Prozessluft an die Umgebung mit einer erniedrigten Temperatur ermöglicht, wobei der weitere Temperatur-Reduktionsschritt ohne zusätzliche Kühlenergie erzielbar ist. Dabei scheinen solche Massnahmen im Widerspruch zur eigentlichen Aufgabe der Prozessluft zu stehen. Die Prozessluft soll ja gerade durch einen intensiven Kühl- und/oder Trocknungsschritt zu einem stabilen Endprodukt führen. Es hat sich nun aber gezeigt, dass bei den bekannten Mischfutter-Herstellungsverfahren auch Geruchsstoffe mit der Prozessluft abgeführt werden, die im Futter verbleiben könnten, ohne zu unerwünschten Geruchs- oder Geschmacksstörungen zu führen und ohne die Lagerfähigkeit zu beeinträchtigen. Mit den Massnahmen zur Temperatur-Reduktion soll verhindert werden, dass unnötigerweise Geruchsstoffe, die am Futter verbleiben können, mit der Prozessluft an die Umgebung abgegeben werden.

Bei einer ersten Ausführungsform der erfindungsgemässen Lösung soll die unnötige Aufnahme von Geruchsstoffen durch die Prozessluft möglichst vermieden werden. Es wäre denkbar, dass die Prozessluft mit einer möglichst tiefen Temperatur in den Kontaktbereich mit dem aufbereiteten bzw. geformten Futter geführt wird. Weil dazu aber eine Kühlvorrichtung zum Kühlen der Aussenluft benötigt würde, ist diese Lösung nicht erwünscht. Zudem würde bei einer geringeren Feuchtigkeitsaufnahme durch die Prozessluft der meist nötige Trocknungsprozess verlangsamt. Auch eine Reduktion der Austrittstemperatur des geformten Futters ist kaum zweckmässig, weil dazu die Konditionierung geändert, oder eine Kühlvorrichtung an der Form- bzw. Pressvorrichtung vorgesehen werden müsste. Weil bei beschichteten Futterwürfeln eine zweistufige Herstellung mit einem Pressschritt und einem anschliessenden Beschichtungsschritt durchgeführt wird, können Geruchsstoffe sowohl aus der Grundstruktur als auch von der Beschichtung austreten. Die von der Beschichtung stammende Geruchsabgabe kann durch eine Temperaturreduktion vermindert werden, ohne dass eine zusätzliche Kühlvorrichtung benötigt wird. Es muss lediglich auf ein Aufbringen der Zuschlagstoffe direkt nach dem Austritt aus der Form- bzw. Pressvorrichtung verzichtet werden. Weil ja das Futter auf jeden Fall nach dem Austritt gekühlt und getrocknet wird, kann vor der Beschichtung eine Teilkühlung bzw. Teiltrocknung durchgeführt werden. Die Temperatur und/oder die Feuchtigkeit darf aber nur soweit reduziert werden, dass die zugeführten Zusätze im Kontakt mit dem Futter diejenigen Viskositätseigenschaften noch haben, die sie für eine gewünschte Bewegung am bzw. im Futter benötigen.

Durch die Temperatur- und/oder Feuchtigkeitsreduktion vor der Zugabe von Zuschlagsstoffen kann gewährleistet werden, dass diese nicht in einem unerwünschten Mass an die Prozessluft abgegeben werden. Die Zuschlagsstoffe werden vom vorgekühlten und/oder vorgetrockneten Futter besser aufgenommen. Entsprechend sind auch Geruchsstoffe besser am Futter gebunden. Es hat sich gezeigt, dass auch Geruchsstoffe des Futters durch die besser aufgenommenen Zusatzstoffe fester an das Futter gebunden werden.

Indem nun das Beaufschlagen des Mischfutters mit Zuschlagstoffen und somit auch das Abführen der Geruchsanteile nach dieser Beaufschlagung auf einer tiefern Temperatur durchgeführt wird, kann die Geruchsabgabe der Zuschlagsstoffe und entsprechend die Geruchsaufnahme durch die Prozessluft vermindert werden. Indem die Futterwürfel vorgekühlt werden, bevor die Beschichtung erfolgt, kann die Prozessluft mit einer tieferen Temperatur aus dem Beschichtungsbereich abgeführt werden. Es wäre auch denkbar direkt mit dem Besprühen eine forcierte Kühlung vorzusehen, was aber mit einem grösseren Aufwand verbunden ist, als eine Vorkühlung, die ja bereits durch das Vorsehen einer Konditionierzeit zwischen dem Pressen und dem Besprühen erzielbar ist.

Wenn nun erkannt ist, dass die Temperatur der abströmenden Prozessluft möglichst tief sein soll, um die darin mitführbaren Geruchsanteile so tief wie möglich zu halten, so kann diese erfinderische Erkenntnis auch bei der Futterherstellung ohne Beschichtung angewendet werden. Nach der Formgebung bzw. nach dem Pressen werden dort nebst der Kühlung und Trocknung des Mischfutters keine weiteren Bearbeitungsschritte durchgeführt. Die Reduktion der Geruchsanteile bzw. der Temperatur der abzuführenden Prozessluft kann also erst später erfolgen. Es soll nun dazu aber kein Wärmetauscher mit Kühlkreislauf eingesetzt werden, wie dies aus dem Stande der Technik bekannt ist. Die Kühlung der abzugebenden Prozessluft soll vielmehr direkt durch das zugeführte Ausgangsmaterial für die Futterherstellung ermöglicht werden. Dazu wird die Prozessluft nach der Erwärmung durch die Futterwürfel, bzw. nach dem Aufnehmen von Geruchsanteilen der Futterwürfel, durch das Ausgangsmaterial geführt. Dabei wird die Temperatur der Prozessluft erniedrigt, was mit einer Kondensation von Geruchsanteilen verbunden ist. Diese kondensierten Anteile werden mit dem Ausgangsmaterial veredelt bzw. konditioniert und zum Endprodukt geformt. Die von der Prozessluft mitführbaren Geruchsanteile werden durch den Kontakt mit dem Ausgangsmaterial und die damit verbundene Temperaturreduktion wesentlich verkleinert, so dass von der an die Umgebung austretenden Prozessluft keine untolerierbaren Geruchsimmisonen mehr ausgehen. Ein zusätzlicher Vorteil dieser Lösung ist es, dass das Ausgangsmaterial bereits vor der Konditionierung vorgewärmt wird. Dadurch kann der Energiebedarf für die Konditionierung reduziert werden.

Die erfindungsgemässe Lösung ermöglicht es, die bei der Mischfutterherstellung gemäss dem Stande der Technik freiwerdenenden Geruchsanteile zu vermindern, indem sie am Futter verbleiben und/oder diesem wieder zugeführt werden. Dazu sind keine energieverbrauchenden Zusatzmittel nötig.

Die Zeichnungen erläutert die Erfindung anhand zweier Ausführungsbeispiele auf die sie aber nicht eingeschränkt ist. Dabei zeigt
- Fig. 1: eine schematische Darstellung einer Vorrichtung zum Herstellen von Futterwürfeln mit einem zweistufigen Bandkühler
- Fig. 2: eine schematische Darstellung einer Vorrichtung zum Herstellen von Futterwürfeln mit einem Bandkühler und einem Schachtkühler
- Fig. 3: einen Ausschnitt aus Fig. 1, wobei dem Wirbelmischer 1 ein weiterer Mischer nachgeschaltet ist.

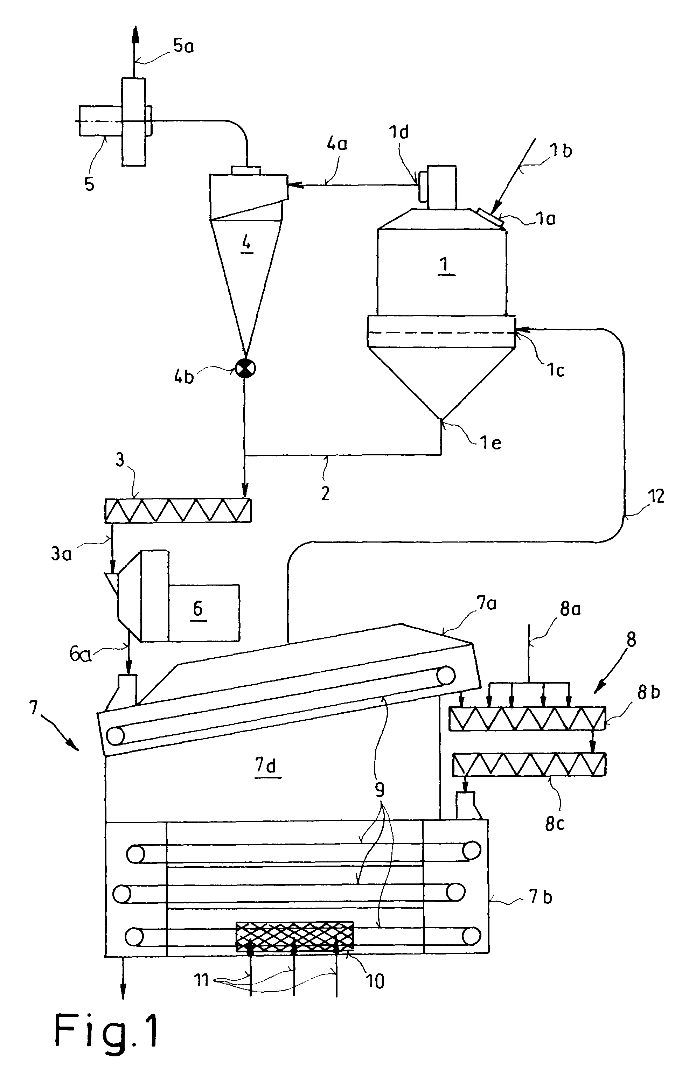

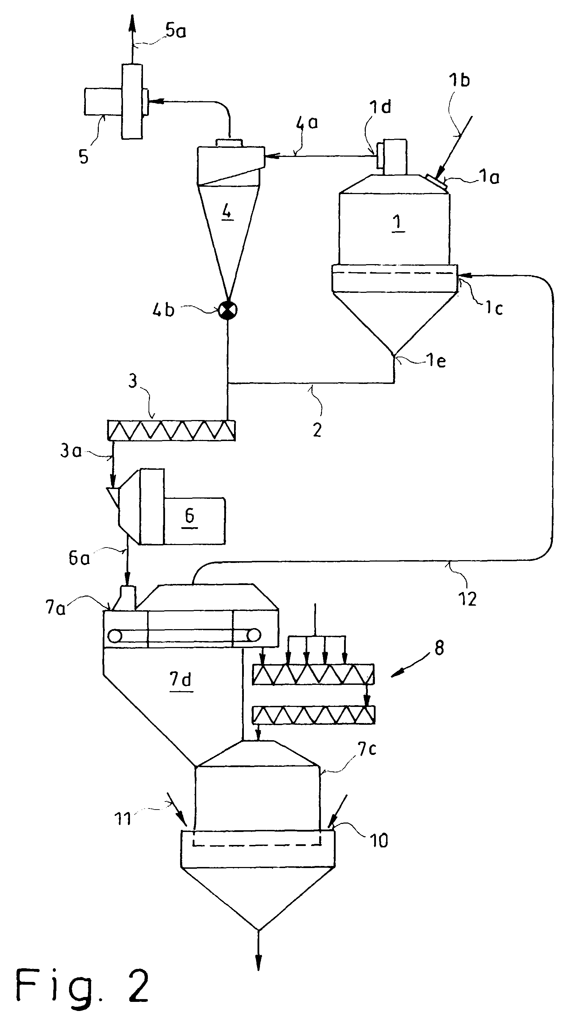

Fig. 1 und Fig. 2 zeigen einen Wirbelkühler 1 bzw. einen Wirbelerhitzer, dem das Ausgangsmaterial für das Mischfutter durch eine Einfüllöffnung 1a gemäss dem Pfeil 1b zugeführt wird. Der Prozess im Wirbelkühler 1 ist ein Wärmeaustauschprozess vorzugsweise mit einer Wirbelmischung, die von einer Luftdurchströmung des Wirbelkühlers 1 von unten nach oben ermöglicht wird. Dabei gibt die Luftströmung Wärme an das Ausgangsmaterial ab. Gegebenenfalls könnten auch mechanische Mischer eingesetzt werden, in denen das Mischgut aber in aufgelockerter Form von der Prozessluft durchströmbar ist, so dass ein intensiver Austausch zwischen der Prozessluft und den Partikeln des Mischgutes erzielbar ist. Entsprechend muss auch ein mechanischer Mischer, wie ein Wirbelmischer bzw. Wirbelkühler 1, zumindest einen Teilbereich haben, in dem die Partikel nicht als Schüttung, sondern vereinzelt mit einem hohen Luftanteil vorliegen. Dazu wird im mechanischen Mischer vorzugsweise mindestens ein Fallbereich, insbesondere mit zur Vertikalen schiefen Umlenkflächen, ausgebildet, in den das Mischgut während des Mischvorganges zumindest einmal gelangt. Die zu kühlende Prozessluft wird im Gegenstrom durch diesen mindestens einen Fallbereich geführt. Im Wirbelkühler wird von der Prozessluft ein Wirbelbett erzeugt. Für die Luftdurchströmung ist im unteren Bereich des Wirbelkühlers 1 eine Lufteintrittsöffnung 1c und am oberen Endbereich des Wirbelkühlers 1 eine Luftaustrittsöffnung 1d angeordnet. Aufgrund der Partikelbewegung und des hohen Prozessluftanteils im Wirbelbett kann ein äusserst effizienter Wärmeübertrag von der Prozessluft an die Partikel des Ausgangsmaterials gewährleistet werden.

Der Wirbelkühler 1 wird, wie später ausgeführt, von der aus einer Futterwürfel-Kühlvorrichtung stammenden Prozessluft durchströmt. Diese Prozessluft wurde somit in der Futterwürfel-Kühlvorrichtung erhitzt und kann im Wirbelkühler 1 wieder etwas abgekühlt werden. Beim im Wirbelkühler 1 durchgeführten Prozessschritt handelt es sich somit um einen weiteren Temperatur Reduktionsschritt. Bei Ausführungsformen mit einem weiteren Temperatur Reduktionsschritt vor der Beschichtung der Futterwürfel kann gegebenenfalls auf einen Wirbelkühler 1 verzichtet werden. Dann wird das gemischte Ausgangsmaterial über eine Zuführung 2 direkt in eine Konditioniervorrichtung 3 geleitet.

Bei der dargestellten Ausführungsform mit dem Wirbelkühler 1 gelangt das vorgewärmte Ausgangsmaterial durch eine Auslassöffnung 1e im tiefstgelegenen Bereich des Wirbelkühlers 1 aus diesem heraus über die Zuführung 2 in die Konditioniervorrichtung 3. Um auch Partikel des Ausgangsmaterials, die mit der Luftströmung aus dem Wirbelkühler 1 gelangen, zu Futter verarbeiten zu können, werden diese von einer Abscheidevorrichtung aus dem Luftstrom entfernt. Die Abscheidevorrichtung umfasst vorzugsweise einen Zyklon 4 und einen Ventilator 5, wobei der Luftstrom mit den Partikeln von der Luftaustrittsöffnung 1d gemäss dem Pfeil 4a in den Zyklon 4 gelangt. Dort werden die Partikel aus dem Luftstrom ausgeschieden und gelangen über eine Schleuse, insbesondere eine Zellenradschleuse 4b, zur Konditioniervorrichtung 3. Die Prozessluft gelangt vom Ventilator 5 vorzugsweise über eine Abgabeleitung 5a in die Umgebung. In der dargestellten Ausführung wird zur Erzeugung der Luftströmung im Wirbelkühler 1 und im Zyklon 4 lediglich ein gemeinsamer Ventilator 5 eingesetzt, was einen kompakten Aufbau und einen niedrigen Bedarf an Betriebsenergie ermöglicht. Vorzugsweise wird die Prozessluft auch im Kühlbereich von diesem einen Ventilator 5 in Bewegung versetzt.

Das konditionierte Ausgangsmaterial gelangt von der Konditioniervorrichtung 3 mit einer Temperatur in einem Bereich zwischen 55°C und 100°C, vorzugsweise zwischen 65°C und 80°C insbesondere von im wesentlichen 70°C gemäss dem Pfeil 3a in eine Würfelpresse 6. Es versteht sich von selbst, dass anstelle der Würfelprese auch eine andere Formvorrichtung eingesetzt werden könnte. Insbesondere könnte die Konditionierung und die Formung kombiniert mit einem Extruder durchgeführt werden. Das geformte Mischfutter gelangt über eine Weiterführung 6a in eine zweistufige Kühlvorrichtung 7. Die erste Stufe der Kühlvorrichtung 7 umfasst eine erste Kühlsektion 7a. Die zweite Stufe umfasst gemäss Fig. 1 eine zweite Kühlsektion 7b und gemäss Fig. 2 einen Schachtkühler 7c. Nach dem ersten Kühlschritt gelangt das geformte Mischfutter in eine Auftragsvorrichtung 8 zum Auftragen von Zusatzstoffen, die über eine Zuleitung 8a zugeführt werden. Das Auftragen der Zusatzstoffe erfolgt beispielsweise in einer ersten Förderschnecke 8b mit Auftragsdüsen. Es können aber beliebige andere Auftragsverfahren gemäss dem Stande der Technik eingesetzt werden. Das mit Zusatzstoffen beaufschlagte Mischfutter gelangt beispielsweise über eine Weiterführungsschnecke 8c zur zweiten Kühlstufe.

Die Prozessluft gelangt von einem Zwischenbereich 7d in die erste Kühlsektion 7a mit einem Kühlband 9. Beim Durchtritt durch das Mischfutter auf dem Kühlband 9 kühlt die Prozessluft dieses Futter um mindestens 15°C, vorzugsweise wenigstens 25°C, insbesondere wenigstens 35°C ab, so dass die Temperatur des Mischfutters beim nachfolgenden Beschichten zwischen 60°C und 35°C, vorzugsweise bei im wesentlichen 45°C liegt. Indem nun eine erste Kühlsektion 7a direkt an die Würfelpresse 6 anschliesst und die Auftragsvorrichtung 8 erst anschliessend an die erste Kühlsektion 7a angeordnet ist, kann die erste Kühlsektion 7a einen Temperatur-Reduktionsschritt durchführen, der den Kontakt des beschichteten Futters mit der Prozessluft in der zweiten Kühlsektion 7b oder im Schachtkühler 7c bei einer tieferen Temperatur gewährleistet.

Gemäss Fig. 1 umfasst die zweite Kühlsektion 7b beispielsweise drei in Serie übereinander angeordnete Kühlbänder 9. Die Prozessluft gelangt gemäss den Pfeilen 11 durch mindestens eine Zuluftöffnung 10 in die zweite Kühlsektion 7b, wo sie nacheinander durch das Mischfutter auf den übereinander angeordneten Kühlbändern 9 strömt und dabei das Futter auf eine Temperatur und eine Feuchtikeit innerhalb entsprechender Toleranzbereiche bringt. Die Prozessluft, die mit dem beschichteten Futter in Kontakt kommt, hat eine Temperatur die unterhalb der Temperatur des beschichteten Mischfutters liegt. Aufgrund der Vorkühlung in der ersten Kühlsektion 7a hat das Mischfutter bei der Beschichtung eine tiefere Temperatur als in der Würfelpresse 6. Entsprechend dieser reduzierten Temperatur wird die Prozessluft weniger von der Beschichtung stammende Geruchsstoffe mitnehmen, bzw. wird das Futter einen kleineren Anteil solcher Geruchsstoffe abgeben.

Die gesamte benötigte Kühlleistung wird durch das Beschichten nach einer Vorkühlung nicht verändert. Die Kühlvorrichtung ist lediglich so auszubilden, dass das Mischfutter nach einer Teilkühlung aus der Kühlvorrichtung in die Auftragsvorrichtung und nach der Beschichtung wieder zurück in die Kühlvorrichtung gelangen kann. Die Kühlluft gelangt von der zweiten Kühlsektion 7b bzw. vom Schachtkühler 7c über den Zwischenbereich 7d zur ersten Kühlsektion 7a. Die erste und die zweite Kühlsektion 7a, 7b ist vorzugsweise lediglich je als Teilbereich der Kühlvorrichtung 7 ausgebildet. Es ist also kein zusätzlicher Kühlaufwand nötig.

Ein weiterer Vorteil des Aufbringens von Zuschlagstoffen nach einer Vorkühlung liegt darin, dass auch temperaturempfindliche Zusatzstoffe im wesentlichen ohne Qualitätsverlust aufgetragen werden können. Beispielsweise können Vitamine oder auch ungesättigte Öle ohne Qualitätsverlust zugegeben werden. Generell ist aufgrund der tieferen Temperatur auch die Reaktionsfgefahr der Zuschlagsstoffe kleiner. So können auch Fettzugaben weniger oxidieren, was mit einer verminderten Geruchsabgabe verbunden ist. Bei tieferen Temperaturen können auch Zusätze aufgebracht werden, die bei höheren Temperaturen flüchtig sind. Es muss jedoch darauf geachtet werden, dass die Temperatur beim Beschichten auch nicht zu tief ist, weil sonst gegebenenfalls die Zusatzstoffe zuwenig fliessfähig sind und sich zuwenig gut am bzw. im Futterwürfel verteilen bzw. integrieren können. Daher ist eine Beschichtung nach der vollständigen Kühlung nicht zweckmässig. Weil aufgrund der Vorkühlung auch der Feuchtigkeitsgehalt der Futterwürfel bereits reduziert ist, können die Zusatzstoffe besser aufgenommen werden. Zudem kann der kleinere noch abzugebende Feuchtigkeitsanteil beim Verdunsten weniger Geruchstoffe mitreissen. Aufgrund der angeführten weiteren Vorteile wird klar, dass eine Vorkühlung auch aufgrund einer erhöhten Produktequalität bei beschichteten Futterwürfeln vorteilhaft ist.

Die aus der Kühlvorrichtung 7 austretende erwärmte Prozessluft mit einem erhöhten Feuchtigkeitsanteil bzw. mit Geruchsanteilen wird über eine Prozessluftleitung 12 vorzugsweise zur Lufteintrittsöffnung 1c des Wirbelkühlers 1 geführt. Diese Leitung 12 kann gegebenenfalls auch direkt über den Zyklon 4 in die Umgebung münden, wenn der Geruchsanteil bereits tolerierbar ist. Um den Geruchsanteil der Prozessluft noch weiter zu senken, wird die Prozessluft vorzugsweise durch den Wirbelmischer geführt. Die Prozessluft kommt dabei in einen intensiven Kontakt mit dem Ausgangsmaterial, das im Wirbelkühler 1 gemischt wird. Bei diesem intensiven Kontakt wird von der Prozessluft Wärme und insbesondere auch sich bildendes Kondensat mit Geruchsstoffen an das Ausgangsmaterial übertragen. Es handelt sich dabei um einen weiteren Temperatur-Reduktionsschritt, der ohne zusätzlichen Kühlaufwand erzielt wird. Die aus dem Wirbelkühler 1 durch die Luftaustrittsöffnung 1d austretende Prozessluft kann aufgrund der tieferen Temperatur einen keineren Feuchtigkeitsanteil und weniger Geruchsstoffe mitführen. Nach dem intensiven Kontakt mit dem Ausgangsmaterial führt die Prozessluft auch Partikel aus dem Wirbelkühler 1 mit, die im Zyklon abgeschieden werden. Nebst den mitgeführten Partikeln können auch Kondensatteilchen im Zyklon 4 aus der Prozessluft ausgeschieden werden.

Die aus dem Ventilator 5 austretende Prozessluft ist aufgrund der beschriebenen Reinigung im Wirbelkühler 1 soweit gereinigt, dass keine untolerierbaren Geruchsimissionen zu befürchten sind. Ein weiterer Vorteil der Temperatur-Reduktion der Prozessluft im Wirbelkühler 1 besteht darin, dass dadurch das Ausgangsmaterial vorgewärmt wird und somit der Energiebedarf für die Konditionierung kleiner wird. Dieser weitere Temperatur-Reduktionsschritt ist somit nicht nur ohne zusätzlichen Kühlaufwand möglich, sondern führt zudem zu einer Erniedrigung des gesamten Energiebedarfs. Weil die Luftströmung im Wirbelkühler 1 und die Kühlluftströmung in der Kühlvorrichtung 7 mit der gleichen Prozessluft aufrechterhalten wird, bzw. weil diese beiden Strömungen in Serie angeordnet sind, genügt bereits ein Ventilator 5.

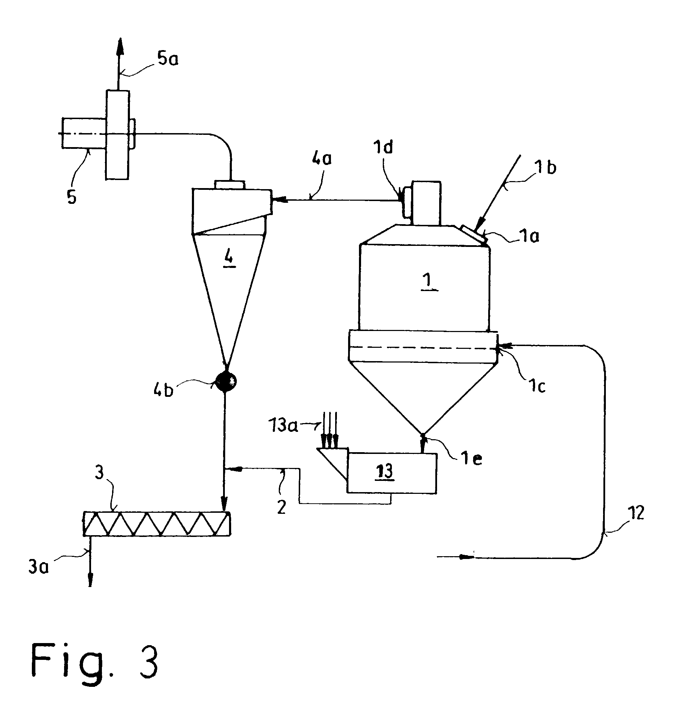

Fig. 3 zeigt eine Ausführungsform mit einem dem Wirbelkühler 1 bzw. Wirbelmischer nachgeschalteten weiteren Mischer 13. Der weitere Mischer 13 ermöglicht das Einbringen von temperaturempfindlichen Zusatzstoffen, wie beispielsweise Vitamine, Proteine, Stärke, ungesättigte Öle oder andere Mikrokomponenten. Die Zuschlagsstoffe werden dem weiteren Mischer 13 über mindestens eine Zuschlags-Zuführung 13a zugeführt. Weil die Zusatzstoffe erst nach dem Wirbelkühler 1 im weiteren Mischer 13 eingebracht werden, kommen diese nicht in Kontakt mit der erwärmten Prozessluft und werden somit nicht unnötig erwärmt. Dadurch kann ein Qualitätsverlust vermieden werden. Aufgrund der tieferen Temperatur ist auch die Reaktionsfgefahr der Zuschlagsstoffe kleiner.

Einerseits versteht es sich von selbst, dass das Führen der Kühlluft durch den Wirbelkühler 1 auch unabhängig davon, ob die Futterwürfel beschichtet werden oder nicht, eine erfindungsgemässe Lösung ist. Die Kühlluftführung durch das Ausgangsmaterial ist auch unabhängig von einer zweistufigen Kühlung vorteilhaft bzw. neu und erfinderisch. Andererseits ist es auch erfinderisch, lediglich vor einem gewünschten Beschichten des geformten Futters eine Vorkühlung vorzusehen, ohne gleichzeitig auch die Prozessluft durch das Ausgangsmaterial zu führen. Beide beschreibenen weiteren Temperatur-Reduktionsschritte sind je einzeln aber auch in Kombination neu und erfinderisch.

## Patentansprüche

1. Verfahren zum Herstellen von Mischfutter in verdichteter Form, insbesondere von Futterwürfeln, bei dem Ausgangsmaterial in einem Konditionierungsschritt zumindest erhitzt, in einem Formschritt geformt, insbesondere zu Würfeln gepresst, und anschliessend mittels Prozessluft gekühlt wird, **dadurch gekennzeichnet, dass** mindestens ein weiterer Temperatur-Reduktionsschritt vorgesehen ist, der den Kontakt der Prozessluft mit Futterteilen direkt nach deren Bereitstellung bei einer erniedrigten Temperatur und/oder die Abgabe der Prozessluft an die Umgebung mit einer erniedrigten Temperatur ermöglicht, wobei der mindestens eine weitere Temperatur-Reduktionsschritt ohne zusätzliche Kühlenergie durch das Führen der Prozessluft erzielt wird.

2. Verfahren nach Anspruch 1, dadurch gekennzeichnet, dass Mischfutter nach dem Formen bzw. nach dem Pressen von Futterwürfeln mit Zusatzstoffen versehen bzw. beaufschlagt wird und ein weiterer Temperatur-Reduktionsschritt zwischen dem Formen und dem Beaufschlagen ausgeführt wird, indem Prozessluft durch das geformte Mischfutter geführt wird.

3. Verfahren nach Anspruch 2, dadurch gekennzeichnet, dass der weitere Temperatur-Reduktionsschritt zwischen dem Formen und dem Beaufschlagen mit Zusatzstoffen die Temperatur des geformten Mischfutters um mindestens 15°C, vorzugsweise wenigstens 25°C, insbesondere wenigstens 35°C erniedrigt, so dass die Temperatur des Mischfutters beim Beschichten zwischen 60 und 35°C, vorzugsweise bei im wesentlichen 45°C liegt.

4. Verfahren nach einem der Ansprüche 1 bis 3, dadurch gekennzeichnet, dass ein weiterer Temperatur-Reduktionsschritt vor der Abgabe der Prozessluft an die Umgebung erfolgt, indem die Prozessluft durch das Ausgangsmaterial geführt wird bevor dieses erhitzt wird, so dass das Ausgangsmaterial vorgewärmt und die Prozessluft entsprechend gekühlt wird, wobei entstehendes Kondensat vorzugsweise direkt am Ausgangsmaterial verbleibt.

5. Vorrichtung zum Durchführen des Verfahrens gemäss Anspruch 1 mit einer Mischvorrichtung (1) zum Mischen des Ausgangsmaterials, einer Konditioniervorrichtung (3) zum Erhitzen, gegebenenfalls zum Befeuchten oder insbesondere zum mit Druck-Beaufschlagen des Ausgangsmaterials, einer Formvorrichtung (6), vorzugsweise einer Würfelpresse, einer Auftragsvorrichtung (8) zum Auftragen von Zusatzstoffen und einer Kühlvorrichtung (7) zum Kühlen des Mischfutters mit Prozessluft, **dadurch gekennzeichnet, dass** die Kühlvorrichtung (7) zweistufig aufgebaut ist und eine erste Kühlstufe zwischen der Formvorrichtung (6) und der Auftragsvorrichtung (8) angeordnet ist, so dass das Mischfutter zumindest auf einem Teil des Weges von der Formvorrichtung (6) zur Auftragsvorrichtung (8) von der ersten Kühlstufe (7a) kühlbar ist.

6. Vorrichtung nach Anspruch 5, dadurch gekennzeichnet, dass die Kühlvorrichtung (7) vor der Auftragsvorrichtung (8) eine erste und nach der Auftragsvorrichtung (8) eine zweite Kühlsektion (7a, 7b) umfasst, wobei vorzugsweise beide Kühlsektionen (7a, 7b) je mindestens ein Kühlband (9) umfassen oder aber gegebenenfalls die zweite Kühlstufe einen Schachtkühler (11) umfasst.

7. Vorrichtung zum Durchführen des Verfahrens gemäss Anspruch 1 mit einer Konditioniervorrichtung (3) zum Erhitzen, gegebenenfalls zum Befeuchten oder insbesondere zum mit Druck-Beaufschlagen des Ausgangsmaterials, einer Formvorrichtung (6), vorzugsweise einer Würfelpresse und einer Kühlvorrichtung (7) zum Kühlen des geformten Mischfutters mit Prozessluft, **dadurch gekennzeichnet, dass** ein Wirbelkühler (1) vorgesehen ist, durch den das Ausgangsmaterial geführt wird, bevor es in die Konditioniervorrichtung (3) gelangt, wobei der Wirbelkühler (1) in einer Prozessluftführung (12, 4a) von der Kühlvorrichung (7) zu einer Abscheidevorrichtung (4) angeordnet ist und im Wirbelkühler (1) die Prozessluft von der Kühlvorrichtung (7) unter Erwärmung des Ausgangsmaterials und unter Abgabe von Kondensat abgekühlt wird.

8. Vorrichtung nach Anspruch 7, dadurch gekennzeichnet, dass die Abscheidevorrichtung (4) einen Zyklon und einen Ventilator (5) umfasst, wobei die abgeschiedenen Partikel vorzugsweise der Konditioniervorrichtung (3) zuführbar sind.

9. Vorrichtung nach Anspruch 8, dadurch gekennzeichnet, dass der Wirbelmischer (1) im unteren Bereich einen Prozessluft-Einlass (1c) und an seiner Oberseite einen Prozessluft-Auslass (1d) umfasst.

10. Vorrichtung nach Anspruch 9, dadurch gekennzeichnet, dass zur Erzeugung der Luftströmung im Wirbelmischer (1) und im Zyklon und gegebenenfalls auch in der Kühlvorrichtung (7) lediglich ein gemeinsamer Ventilator (5) eingesetzt ist.
